# EUROPÄISCHE PATENTSCHRIFT

(11) **EP 4 376 686 B1**
(45) Veröffentlichungstag und Bekanntmachung des Hinweises auf die Patenterteilung: **24.12.2025**
(21) Anmeldenummer: 22757949.7
(22) Anmeldetag: 28.07.2022
(51) Int. Cl.: A47J 43/07

(54) **AUFSATZ FÜR EINE KÜCHENMASCHINE, ANORDNUNG EINES AUFSATZES AUF EINER KÜCHENMASCHINE SOWIE VERFAHREN ZUR VERBINDUNG DES AUFSATZES MIT EINEM DECKEL**
ATTACHMENT FOR A FOOD PROCESSOR, ARRANGEMENT OF AN ATTACHMENT ON A FOOD PROCESSOR, AND METHOD FOR CONNECTING THE ATTACHMENT TO A COVER
ACCESSOIRE DE ROBOT MÉNAGER, AGENCEMENT D'UN ACCESSOIRE SUR UN ROBOT MÉNAGER ET PROCÉDÉ DE LIAISON DE L'ACCESSOIRE À UN COUVERCLE

(30) Priorität: 30.07.2021 DE 102021119938; 11.10.2021 DE 102021126301
(43) Veröffentlichungstag der Anmeldung: 05.06.2024
(73) Patentinhaber: Wundermix GmbH, 85748 Garching b. München (DE)
(72) Erfinder: KEUSGEN, Adrian, 79346 Endingen am Kaiserstuhl (DE)
(74) Vertreter: Patentanwälte Bauer Vorberg Kayser
(86) Internationale Anmeldenummer: PCT/EP2022/071248
(87) Internationale Veröffentlichungsnummer: WO 2023/006899

(56) Entgegenhaltungen:
- EP-A1- 3 153 080
- WO-A1-2017/197822
- WO-A1-2020/227742
- DE-A1- 102012 103 877
- US-A1- 2012 294 108

## Beschreibung

Die vorliegende Erfindung betrifft einen Aufsatz für eine Küchenmaschine gemäß Patentanspruch 1. Weiterhin betrifft die Erfindung eine Anordnung eines solchen Aufsatzes auf einer Küchenmaschine gemäß Patentanspruch 10 und ein Verfahren zur Verbindung eines Aufsatzes mit einem Deckel gemäß Patentanspruch 13.

Aus dem Stand der Technik sind verschiedene Küchenmaschinen bekannt. Mit einer Küchenmaschine können Kochprozesse, Backprozesse, oder allgemein Zubereitungsprozesse von Lebensmitteln automatisiert oder teilautomatisiert durchgeführt werden.

Es sind Küchenmaschinen bekannt, die eine Antriebseinheit für eine in einem Topf angeordnete Rotationseinheit (z.B. ein Rührwerk, Schneidmittel, Mischmittel oder dergleichen) aufweisen. Mittels der Antriebseinheit kann die in dem Topf angeordnete Rotationseinheit bewegt, insbesondere rotiert, werden. Der Topf kann eine an einem unteren Topfende angeordnete Topfbasis, einen sich an die Topfbasis anschließenden Topfmantel und einen Deckel aufweisen, wobei mit dem Deckel eine der Topfbasis gegenüberliegende obere Topföffnung verschließbar ist, und wobei der Deckel eine Einfüllöffnung aufweist, welche einen geringeren Durchmesser als die obere Topföffnung aufweist. Die eigentliche Antriebseinheit kann in einer Basiseinheit der Küchenmaschine integriert sein, auf welche der Topf auf- oder in welche der Topf eingesetzt werden kann. Die Rotationseinheit kann in Nähe der Topfbasis, also am unteren Topfende, angeordnet sein, wobei die Topfbasis eine Öffnung aufweisen kann, durch welche eine Welle der Antriebseinheit hindurchragen und mechanisch an die Rotationseinheit ankoppeln kann. Derartige Küchenmaschinen (Basiseinheit und Topf) werden beispielsweise unter der Bezeichnung Thermomix^{®} vertrieben.

Es besteht ein wachsender Bedarf derartige Küchenmaschinen funktional zu erweitern und neue Anwendungsgebiete zu erschließen. Dazu können verschiedene Zubehörteile an einer solchen Küchenmaschine angeordnet werden. Als Zubehörteil sind Aufsätze bekannt, welche auf dem Deckel des Topfes angeordnet werden.

Aus der US 2012/0294108 A1 ist eine Mischvorrichtung bekannt, die einen Mischbehälter und einen Deckel umfasst. Der Mischbehälter hat eine Innenfläche, die ein Innenvolumen begrenzt, und eine Mischklinge, die innerhalb des Innenvolumens angeordnet ist. Der Deckel ist lösbar am Mixbehälter befestigt und umfasst mindestens einen Abstreifer, der sich in das Innenvolumen erstreckt. Der Abstreifer grenzt an die Innenfläche des Mixbehälters und ist so angeordnet und konfiguriert, dass er die Rotationsströmung von Lebensmittelpartikeln innerhalb des Innenvolumens unterbricht und/oder Lebensmittelpartikel von einer Innenfläche des Mixbehälters abstreift. Der Abstreifer ist als Aufsatz ausgebildet. Aus der WO 2020/227742 A1 und der DE 10 2012 103 877 A1 sind Aufsätze für eine Küchenmaschine bekannt, mit einem Grundkörper und mit einem sich von einer Bodenfläche des Grundkörpers in einer Steckrichtung erstreckenden Einsteckabschnitt zur Verbindung des Aufsatzes mit einem Deckel, wobei auf einer Unterseite der Bodenfläche zwei Auflageflächen ausgebildet sind und die erste Auflagefläche und die zweite Auflagefläche in Steckrichtung betrachtet voneinander beabstandet sind.

Die zugrundeliegende Aufgabe der vorliegenden Erfindung ist es, einen Aufsatz für eine Küchenmaschine, eine Anordnung eines Aufsatzes auf einer Küchenmaschine, sowie ein Verfahren zur Verbindung eines Aufsatzes mit einem Deckels bereitzustellen, wobei der Aufsatz möglichst flexibel einsetzbar sein soll und vor allem mit mehreren Varianten an Deckeln nutzbar ist.

Die Lösung dieser Aufgabe erfolgt mit den Merkmalen der unabhängigen Ansprüche. Weitere praktische Ausführungsformen und Vorteile sind in Verbindung mit den abhängigen Ansprüchen beschrieben.

Die Erfindung betrifft einen Aufsatz für eine Küchenmaschine. Der Aufsatz dient insbesondere zur Funktionserweiterung der Küchenmaschine und insbesondere handelt es sich bei dem Aufsatz um eine Saftpresse, einen Gemüseschneider, eine Salatschleuder, einen zusätzlichen Behälter oder einen Garbehälter. Der Aufsatz weist einen Grundkörper mit einer Bodenfläche auf, wobei die Bodenfläche den unteren Abschluss des Aufsatzes zur Küchenmaschine hin bildet. Ausgehend von der Bodenfläche erstreckt sich in einer Steckrichtung ein Einsteckabschnitt. Der Einsteckabschnitt dient zur Verbindung des Grundkörpers mit einem Deckel der Küchenmaschine. Insbesondere sind der Grundkörper und/oder der Einsteckabschnitt zylindrisch ausgebildet.

Auf einer, dem Deckel zugewandten, Unterseite der Bodenfläche sind eine erste Auflagefläche und eine zweite Auflagefläche ausgebildet, welche in Steckrichtung betrachtet voneinander beabstandet sind. Als Auflagefläche wird hier eine Fläche bezeichnet, mit welcher sich der Aufsatz auf dem darunter angeordneten Deckel abstützt und mit welcher der Aufsatz auf dem Deckel aufliegt.

Zusätzlich weist der Einsteckabschnitt außenseitig mindestens zwei Vorsprünge auf. Die Vorsprünge sind in Steckrichtung betrachtet voneinander beabstandet und bilden jeweils eine Rastfläche. Insbesondere sind mehrere erste und zweite Vorsprünge um den Umfang des Einsteckabschnittes verteilt angeordnet. Die Rastflächen sind insbesondere zur Unterseite der Bodenfläche gerichtet. Mit den Rastflächen kann der Absatz an dem Deckel der Küchenmaschine einrasten. Die Rastflächen dienen vor allem dazu einen Reibschluss zwischen dem Deckel und dem Aufsatz herzustellen und somit auch ein Drehmoment aufzunehmen, wie im Folgenden noch erläutert wird.

Insgesamt stellt der erfindungsgemäße Aufsatz zwei Auflageflächen und zwei Rastflächen zur Verfügung, die zum einen die Abstützung zum Topf und zum anderen die Aufnahmeöffnung des Drehmoments bewirken. Durch die verschiedenen in Steckrichtung voneinander beabstandeten Auflageflächen sowie Rastflächen kann der Aufsatz auf Deckel unterschiedlicher Geometrie und insbesondere unterschiedlicher Höhe drehfest aufgesetzt werden und ist somit besonders flexibel einsetzbar. Insbesondere kann durch die genannten Auflageflächen und Rastflächen realisiert werden, dass die Bodenfläche des Aufsatzes auch bei unterschiedlichen Deckeln in Bezug auf eine später noch beschriebene Dreheinheit dieselbe Höhe bzw. denselben Abstand hat und damit der Aufsatz auch bei unterschiedlichen Deckeln mit nur einer Verbindungswelle verwendet werden kann. Die Verbindungswelle kann dann als Gleichteil für verschiedene Varianten von Deckeln verwendet werden.

Der vorgeschlagene Aufsatz kann bekannte Küchenmaschinen wie den Thermomix^{®} unmittelbar erweitern und lässt sich ohne Veränderung von Bauteilkomponenten in Verbindung mit dem Deckel des der Küchenmaschine zugehörigen Topfs verwenden. Die Verwendung ist allerdings nicht auf Küchenmaschinen wie den Thermomix^{®} beschränkt.

Insbesondere handelt es sich bei dem Aufsatz um ein einstückiges Bauteil. Beispielsweise kann in solches Bauteil aus Kunststoff sein und z.B. im Spritzgussverfahren gefertigt werden.

Die erste Auflagefläche ist insbesondere durch eine an der Bodenfläche ausgebildete umlaufende Nut gebildet. In dem Nutgrund kann sich der Aufsatz auf einen Teil des Deckels stützen bzw. auf einem Teil des Deckels aufliegen. Insbesondere kann der Aufsatz mit einem in Zusammenhang mit dem Thermomix^{®} verwendbaren Deckel des Modells TM5^{®} und TM6^{®}, verwendet werden, wobei der Deckel einen umlaufenden, hervorragenden Kragen aufweist. Alternativ oder in Ergänzung dazu ist die zweite Auflagefläche durch einen umlaufenden, sich von der Unterseite der Bodenfläche nach unten in Steckrichtung erstreckenden Kragen gebildet. Der Kragen und insbesondere die nach unten Richtung Deckel weisende Stirnfläche des Kragens bildet die zweite Auflagefläche, mit welcher sich der Aufsatz an dem Deckel abstützen kann. Insbesondere kann sich der Aufsatz an einem Randwulst abstützen, wie ihn ein in Zusammenhang mit dem Thermomix^{®} verwendeter Deckel unter der Bezeichnung TM31 aufweist.

In einer praktischen Ausführungsform des erfindungsgemäßen Aufsatzes weist der Einsteckabschnitt mindestens eine Lasche auf. Insbesondere ist der Einsteckabschnitt durch mehrere, sich in Steckrichtung erstreckende Laschen gebildet. Insbesondere handelt es sich um zwei Laschen, vorzugsweise um vier bis acht Laschen. Die Laschen sind voneinander durch Schlitze getrennt. Die Ausbildung von Laschen bewirkt eine Flexibilität des Einsteckabschnitts senkrecht zur Steckrichtung und ermöglicht ein Ein- und Ausfedern des Einsteckabschnittes. Dies erleichtert die Einführung des Einsteckabschnittes in eine Aufnahmeöffnung des Deckels und auch ein Einrasten des Aufsatzes.

Die zwei Rastflächen werden insbesondere von mindestens einer, außenseitig des Einsteckabschnittes angeordneten, sich in Steckrichtung erstreckenden Rippe realisiert. Dabei bildet ein erstes Ende der Rippe den ersten Vorsprung und die erste Rastfläche. Zudem weist die Rippe eine Vertiefung auf, deren Seitenfläche den zweiten Vorsprung bildet. Falls das Einsteckabschnitt mehrere Laschen aufweist, so weist jede Lasche vorzugsweise jeweils eine Rippe auf.

Insbesondere nimmt die Dicke der Rippe im Querschnitt betrachtet vom ersten Ende in Richtung des zum Küchengerät weisenden Endes zu.

Um den Aufsatz möglichst leicht und mit wenig Kraftaufwand in den Deckel einzustecken, weist die Rippe im Querschnitt betrachtet insbesondere eine wellenförmige Geometrie auf. Die Übergänge zu der Vertiefung in der Rippe sind insbesondere abgerundet. Die Vertiefung stellt dann ein Wellental dar, welches von zwei Wellenbergen begrenzt ist.

Alternativ oder in Ergänzung zu der vorstehend beschrieben Rippe, ist auch denkbar, dass die Vorsprünge als zwei separate Elemente realisiert sind, die voneinander in Umfangsrichtung des Einsteckabschnittes beabstandet sind. Insbesondere weist eine Lasche außenseitig entweder einen ersten Vorsprung oder einen zweiten Vorsprung auf. Je nach Deckel ragen dann entweder die ersten Vorsprünge oder die zweiten Vorsprünge durch den Deckel und liegen an dessen Unterseite an.

In einer weiteren praktischen Ausführungsform des erfindungsgemäßen Aufsatzes weist der Einsteckabschnitt an dem freien Ende eine Einführschräge auf. Die Einführschräge erleichtert das Zentrieren und genaue Einführen des Einsteckabschnittes in den Deckel.

Erfindungsgemäß ist in dem Einsteckabschnitt ein Aufnahmebereich zur Aufnahme einer Verbindungswelle angeordnet. Wie vorstehend schon beschrieben, kann zum Beispiel für den Antrieb einer Saftpresse eine Verbindungswelle von einer Rotationseinheit zum Aufsatz geführt werden. Dabei durchragt die Verbindungswelle den Einsteckabschnitt. Der Aufnahmebereich bewirkt eine zusätzliche Führung der Verbindungswelle.

Erfindungsgemäß ist in dem Aufnahmebereich für die Verbindungswelle ein Gleitlager angeordnet. Insbesondere ist das Gleitlager in den Aufnahmebereich gesteckt und verrastet. Insbesondere ist das Gleitlager aus Kunststoff.

In einer weiteren praktischen Ausführungsform des erfindungsgemäßen Aufsatzes stütz sich der Aufnahmebereich über mindestens eine Stützstrebe und bevorzugt mehrere Stützstreben an der Innenseite des Einsteckabschnittes ab. Die Stützstreben erstrecken sich von der Außenseite des Aufnahmebereichs für die Verbindungswelle bis zu der Innenseite der Einsteckabschnittes, insbesondere der Innenseite der Laschen. Insbesondere sind mehrere Stützstreben über den Umfang verteilt angeordnet, um eine stabile Abstützung des hülsenförmigen Aufnahmebereiches zu gewährleisten.

Je nach Anwendung des Aufsatzes kann die Bodenfläche des Grundkörpers Öffnungen aufweisen oder komplett geschlossen sein. Im Falle einer Saftpresse weist die Bodenfläche insbesondere in dem Bereich zwischen der Innenfläche und der hülsenförmigen Aufnahmeöffnung mindestens eine Öffnung auf, durch die Saft nach unten in den Topf gelangen kann. Für einen Gemüseschneider ist die Bodenfläche vorzugsweise geschlossen und das Schnittgut kann nicht nach unten dringen.

Wie vorstehend bereits beschrieben, kann der Aufsatz für eine Saftpresse noch eine Presseinheit für Früchte, insbesondere Zitrusfrüchte, aufweisen. Alternativ kann der Aufsatz Schneidmittel zum Schneiden oder Häckseln aufweisen.

Die Erfindung betrifft auch eine Anordnung eines wie vorstehend beschriebenen Aufsatzes auf einer Küchenmaschine mit einem Topf und einem Deckel. Der Einsteckabschnitt ist dabei in eine Aufnahmeöffnung (auch als Einfüllöffnung bezeichnet) des Deckels eingesteckt und der Grundkörper liegt mit der ersten Auflagefläche oder der zweiten Auflagefläche an dem Deckel auf. Der Einsteckabschnitt ragt so weit durch den Deckel, dass entweder die erste Rastfläche oder die zweite Rastfläche an der Unterseite des Deckels anliegt. Durch die Auflageflächen ist eine stabile Auflage des Aufsatzes auf dem Deckel realisiert, wobei der Aufsatz auch bei einer Krafteinwirkung von oben - wie zum Beispiel beim händischen Pressen einer Zitrone - seine Position beibehält. Durch den Reibschluss zwischen den Rastflächen bzw. Vorsprüngen und der Unterseite des Deckels ist der Aufsatz zudem drehfest an dem Deckel angeordnet, so dass bei Drehung einer Verbindungswelle der Aufsatz ortsfest an dem Deckel bleibt.

Insgesamt ist die erfindungsgemäße Anordnung für einen Anwender leicht durch einfaches Stecken herstellbar. Durch die Auflagefläche und das Einrasten der Rastflächen wird eine haptische Rückmeldung gegeben, dass der Aufsatz fest auf dem Deckel montiert ist. Vor allem ist der Aufsatz mit unterschiedlichen Deckeln verwendbar und die Bodenfläche des Aufsatzes behält dabei jeweils einen konstanten Abstand zu einer Rotationseinheit.

Insbesondere ist der Durchmesser des Einsteckabschnittes so auf den Durchmesser der Aufnahmeöffnung in dem Deckel abgestimmt, dass diese genau ineinanderpassen. Lediglich die Vorsprünge bzw. die Rippe stellen ein Übermaß dar, da hier der Durchmesser des Einsteckabschnittes mitsamt den Vorsprüngen größer ist als der Durchmesser der Aufnahmeöffnung in dem Deckel. Zum Durchführen der Vorsprünge weist der Einsteckabschnitt insbesondere Laschen auf, die leicht nach Innen federn und nach Durchstecken des Vorsprungs durch den Deckel wieder nach außen ausfedern.

Insbesondere weist die Küchenmaschine eine Rotationseinheit auf, die mechanisch an eine Antriebseinheit gekoppelt ist und unter Einsatz der Antriebseinheit rotierbar ist, wobei eine Verbindungswelle mit der Rotationseinheit verbunden ist und sich die Verbindungswelle von der Rotationseinheit durch den Topf und den Deckel bis in den Aufsatz erstreckt. Insbesondere erstreckt sich die Rotationseinheit durch einen hülsenförmigen Aufnahmebereich, der innerhalb des Einsteckabschnittes angeordnet ist. Insbesondere in Verbindung mit den beschriebenen zum Thermomix^{®} verwendeten Deckeln weist der Aufsatz bzw. die Bodenfläche des Aufsatzes immer denselben Abstand zur Rotationseinheit auf, sodass die Verbindungswelle als Gleichteil erhalten bleibt.

In einer weiteren praktischen Ausführungsform der erfindungsgemäßen Anordnung kann auf das freie Ende der Welle ein Funktionselement aufgesteckt sein. Bei dem Funktionselement kann es sich beispielsweise um eine Presseinheit für Früchte oder ein Schneidwerkzeug handeln.

Die Erfindung betrifft auch ein Verfahren zur Verbindung eines wie vorstehend beschriebenen Aufsatzes mit einem Deckel, wobei der Aufsatz mit dem Einsteckabschnitt in einer Steckrichtung durch eine Aufnahmeöffnung des Deckels geführt wird, solange bis der Aufsatz mit der ersten Auflagefläche oder der zweiten Auflagefläche an dem Deckel aufliegt und die erste Rastfläche oder die zweite Rastfläche unterhalb des Deckels eingerastet ist.

Weitere praktische Ausführungsformen und Vorteile sind im Folgenden in Zusammenhang mit den Figuren beschrieben. Es zeigen:
- Fig. 1: einen Aufsatz in einer ersten Ausführungsform in einer perspektivischen Ansicht von schräg unten,
- Fig. 2: den Aufsatz aus Fig. 1 in einer Seitenansicht,
- Fig. 3: den Aufsatz aus den Fig. 1 und 2 in einer Draufsicht,
- Fig. 4: einen Aufsatz in einer zweiten Ausführungsform in einer perspektivischen Ansicht von schräg unten,
- Fig. 5: den Aufsatz aus Fig. 4 in einer Seitenansicht,
- Fig. 6: den Aufsatz aus Fig. 1 in einer Anordnung mit einer ersten Variante eines Deckels im Querschnitt,
- Fig. 7: den Aufsatz aus Fig. 1 in einer Anordnung mit einer zweiten Variante eines Deckels im Querschnitt,
- Fig. 8: den Aufsatz aus Fig. 1 in einer Anordnung mit einer ersten Variante eines Deckels gemäß Fig. 6 und mit einem Topf und einer Verbindungswelle im Querschnitt, und im Vergleich dazu den Aufsatz aus Fig. 1 in einer Anordnung mit einer zweiten Variante eines Deckels gemäß Fig. 7 und einem Topf und einer Verbindungswelle im Querschnitt.

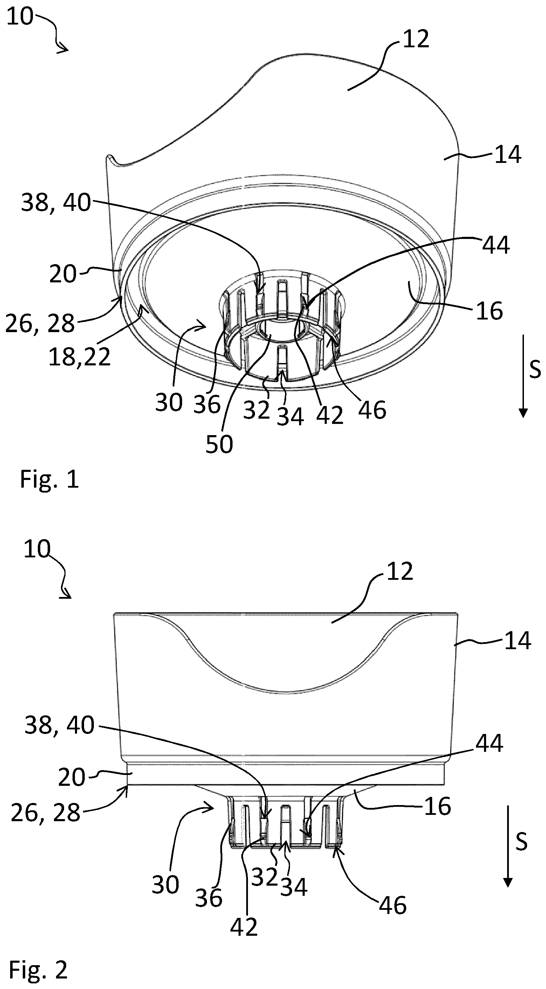

In den Fig. 1 bis 3 ist eine erste Ausführungsform eines erfindungsgemäßen Aufsatzes 10 dargestellt.

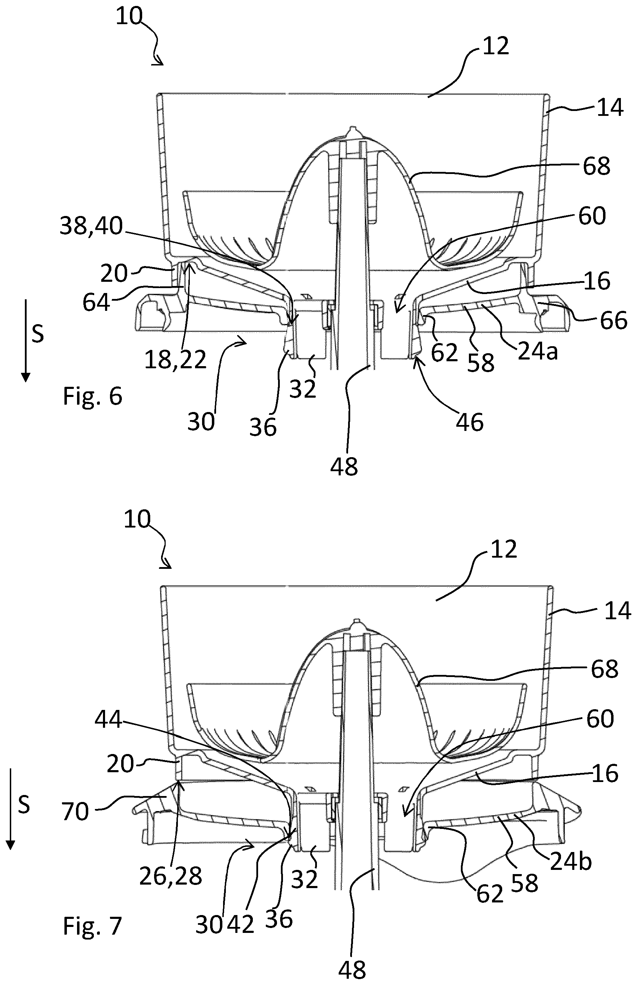

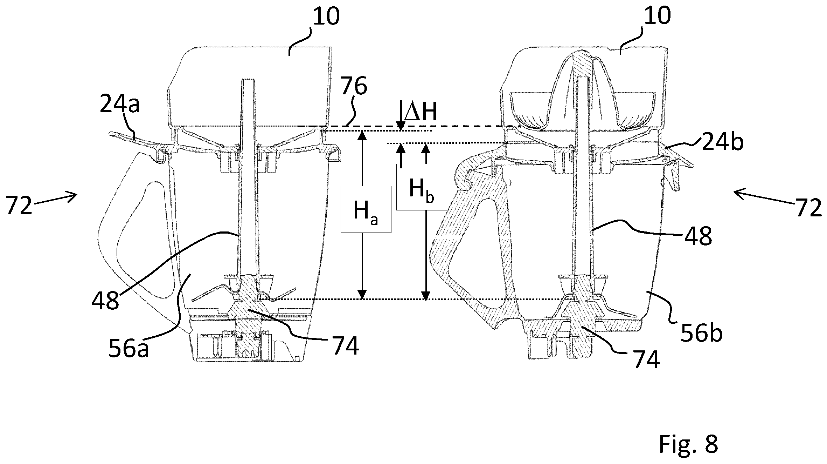

Der Aufsatz 10 weist einen Grundköper 12 mit einer Mantelfläche 14 und einer Bodenfläche 16 auf. Der Grundkörper 12 ist zylindrisch ausgebildet. Die Bodenfläche 16 weist auf ihrer Unterseite, der Mantelfläche 14 abgewandten Seite eine umlaufende Nut 18 auf. Radial weiter außen liegend weist die Bodenfläche 16 zudem einen umlaufenden Kragen 20 auf. Der Kragen 20 erstreckt sich von der Bodenfläche 16 in einer Steckrichtung S. Die Nut 18 bildet eine erste Auflagefläche 22, um den Aufsatz 10 auf einer ersten Variante eines Deckels 24a zu positionieren (vgl. Fig. 6 und 8). Die Stirnseite 26 des Kragens 20 bildet zudem eine zweite Auflagefläche 28, mittels welcher der Aufsatz 10 auf einer zweiten Variante eines Deckels 24b aufsetzbar ist (vgl. Fig. 7 und 8). Die erste Auflagefläche 22 und die zweite Auflagefläche 28 sind in Steckrichtung S betrachtet beabstandet voneinander angeordnet.

Ausgehend von der Bodenfläche 16 erstreckt sich in Steckrichtung S ein Einsteckabschnitt 30. Der Einsteckabschnitt 30 ist vorliegend als Hohlzylinder ausgebildet.

Der Einsteckabschnitt 30 ist vorliegend durch acht Laschen 32 gebildet, welche jeweils durch einen Schlitz 34 voneinander getrennt sind. Die Laschen 32 können in radialer Richtung nach innen und außen federn.

Zudem ist an jeder Lasche 32 eine Rippe 36 ausgebildet, die sich über einen Teil der Länge der Lasche 32 erstreckt. Ein erstes Ende 38 der Rippe 36 bildet einen ersten Vorsprung 40, wobei der erste Vorsprung 40, wie in Verbindung mit den Fig. 6 und 8 erläutert wird, eine erste Rastfläche zur reibschlüssigen Verbindung des Aufsatzes 10 mit dem Deckel 24a bildet. Die Rippe 36 weist zudem eine Vertiefung 42 auf, deren in Steckrichtung S nach unten weisende Seitenfläche einen zweiten Vorsprung 44 bzw. eine zweite Rastfläche bildet. Diese Rastfläche 44 dient zur reibschlüssigen Verbindung mit einem wie in den Fig. 7 und 8 gezeigten Deckel 24b. Die erste und zweite Rastfläche 40, 44 sind in Steckrichtung S betrachtet beabstandet voneinander angeordnet.

Im Querschnitt betrachtet nimmt die Höhe der Rippe 36 zum freien Ende des Einsteckabschnittes 30 zu. Die Rippe 36 weist im Querschnitt betrachtet eine wellenförmige Geometrie auf, wobei die Vertiefung 42 ein Wellental bildet, welches von zwei Wellenbergen umgeben ist. Durch die abgerundete Geometrie kann der Einsteckabschnitt 30 mit der Rippe 36 möglichst gleitend in den Deckel 24a, 24b eingesteckt werden und wieder entfernt werden. Die oberhalb der Rippen 36 zu erkennenden Nuten sind lediglich herstellungstechnisch bedingt.

Weiterhin weist der Einsteckabschnitt 30 an dem freien Ende eine Einführschräge 46 auf, die zudem das Einstecken des Aufsatzes 10 auf einen Deckel 24a, 24b erleichtern soll.

Zur Führung einer Verbindungswelle 48 (vgl. Fig. 8), ist innerhalb des Einsteckabschnittes 30 ein hülsenförmiger Aufnahmebereich 50 ausgebildet. In den Aufnahmebereich 50 kann zudem ein Gleitlager eingeclipst werden (nicht dargestellt). Der Aufnahmebereich 50 stützt sich über vier Stützstreben 52 an der Innenseite des Einsteckabschnittes 30 ab.

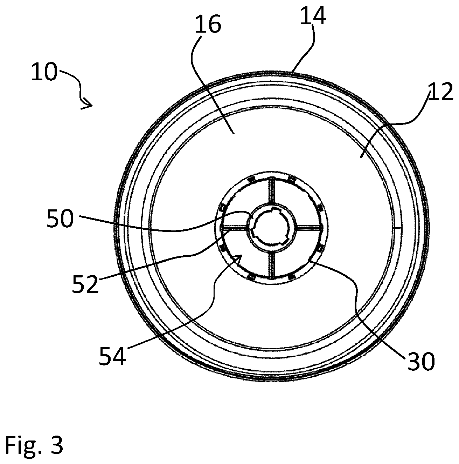

Zwischen dem Einsteckabschnitt 30 und dem Aufnahmebereich 50 weist die Bodenfläche 16 in der hier gezeigten Ausführungsform Öffnungen 54 auf (vgl. Fig. 3). Diese dienen insbesondere dazu, Saft einer Saftpresse in einen Topf 56 zu leiten. Es kann aber auch vorgesehen sein, dass die Bodenfläche vollständig geschlossen ist.

Insgesamt ist der Aufsatz 10 einstückig ausgebildet und aus Kunststoff.

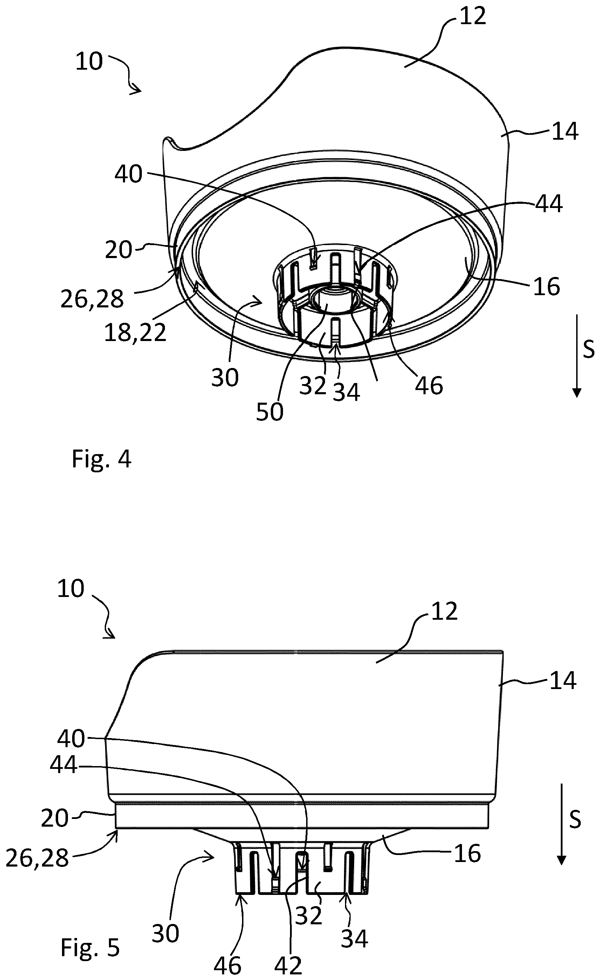

In Verbindung mit den Fig. 4 und 5 wird im Folgenden eine zweite Ausführungsform eines Aufsatzes 10 beschrieben, wobei zur Beschreibung identischer oder zumindest funktionsgleicher Bauelemente dieselben Bezugszeichen verwendet werden wie zur Beschreibung der ersten Ausführungsform.

Die zweite Ausführungsform unterscheidet sich von der ersten Ausführungsform durch die Anordnung der Vorsprünge 40, 44 bzw. Rastflächen. Hier weist jede Lasche 32 nur einen Vorsprung 40, 44 bzw. eine Rastfläche auf. Die erste und zweite Rastfläche 40, 44 sind damit nicht nur in Steckrichtung S voneinander beabstandet, sondern auch in Umfangsrichtung.

Anhand der Fig. 6 bis 8 wird nun das Funktionsprinzip des Aufsatzes 10 in Verbindung mit zwei verschiedenen Varianten von Deckeln 24a, 24b erläutert.

In Fig. 6 ist der Aufsatz 10 auf einer ersten Variante eines Deckels 24a angeordnet. Diese erste Variante des Deckels 24a weist eine Deckfläche 58 auf, die eine kreisförmige Aufnahmeöffnung 60 aufweist, in welcher der Einsteckabschnitt 30 des Aufsatzes 10 eingesteckt ist. Die Aufnahmeöffnung 60 ist von einem Kragen 62 begrenzt. Die Deckfläche 58 weist zudem an ihrer Oberseite einen umlaufenden Kragen 64 auf, an den sich radial außenseitig ein Randbereich 66 anschließt. Wie gut erkennbar ist, ist der Aufsatz 10 so weit auf den Deckel 24a aufgeschoben, dass der Kragen 64 des Deckels 24a mit seiner Stirnseite in der Nut 18, d.h. an der ersten Auflagefläche 22 anschlägt. In dieser Position erstreckt sich der Einsteckabschnitt 30 so weit durch die Aufnahmeöffnung 60, dass das erste Ende 38 der Rippe 36, welches den ersten Vorsprung 40 bzw. die erste Rastfläche bildet an der Unterseite der Deckfläche 58 zur Anlage kommt.

Es ist zudem in Fig. 6 gut erkennbar, dass Laschen 32 passgenau durch die Aufnahmeöffnung 60 passen, die Rippen 36 aber weiter radial nach außen ragen und entsprechend gegenüber der Aufnahmeöffnung 60 ein Übermaß aufweisen. Die Rippen 36 verhindern in dieser gezeigten Anordnung, dass der Aufsatz 10 zu leicht von dem Deckel 24a entfernt werden kann. Erst durch Überwindung der Federkraft der Laschen 32, so dass diese nach Innen federn, kann der Aufsatz 10 wieder entfernt werden.

Zudem weist der Aufsatz 10 hier nur ein Funktionselement 68, hier eine Presseinheit einer Saftpresse auf. Durch den Aufnahmebereich 50 ragt eine Verbindungswelle 48, deren Funktion im Anschluss mit Fig. 8 erläutert wird.

In Fig. 7 ist gezeigt, wie der Aufsatz 10 auf einer zweiten Variante des Deckels 24b angeordnet ist. Das Grundprinzip ist identisch, der Einsteckabschnitt 30 ist durch eine Aufnahmeöffnung 60 in dem Deckel 24b gesteckt. Der Deckel 24b ist in dieser zweiten Variante anders gestaltet (vgl. auch Fig. 8). In dieser Variante des Deckels 24b weist der Deckel 24b eine Deckfläche 58 auf, die umlaufend von einem Randwulst 70 umgeben ist. Der Aufsatz 10 ist so auf dem Deckel 24b angeordnet, dass die Stirnfläche 26 des Kragens 20 des Aufsatzes 10 als zweite Anlagefläche 28 in Kontakt mit dem Randwulst 70 des Deckels 24b gelangt. In dieser Position ist der Einsteckabschnitt 30 so weit durch die Aufnahmeöffnung 60 geführt, dass der zweite, durch die Vertiefung 42 in der Rippe 36 gebildete Vorsprung 44 an der Unterseite der Deckfläche 58 anliegt. Durch die ansteigende Höhe der Rippe 36 wird ein Wiederherausziehen des Aufsatzes 10 erschwert. Zudem ergibt sich durch das Übermaß der Rippe 36 ein besonders guter Reibschluss.

In den Fig. 8 sind zwei Varianten von Küchenmaschinen 72 mit Töpfen 56a, 56b und korrespondierenden Deckeln 24a, 24b mit dem erfindungsgemäßen Aufsatz 10 gegenübergestellt. Zunächst werden die einzelnen Bauteile erläutert und anschließen die Funktion des Aufsatzes 10. Es sei darauf hingewiesen, dass der Einsteckabschnitt 30 in Fig. 8 nur vereinfacht dargestellt ist und daran keine Vorsprünge zu erkennen sind.

Die Küchenmaschine 72 weist jeweils eine Antriebseinheit und einen Topf 56a, 56b auf. Die Antriebseinheit kann einen Elektromotor umfassen und eine in dem Topf 56a, 56b angeordnete Rotationseinheit 74 antreiben bzw. in eine Rotationsbewegung versetzen. Je nach Art der Küchenmaschine 72 kann die Rotationseinheit 74 ein Rührwerk, eine Messereinheit oder dergleichen bereitstellen. Die Rotationseinheit 74 ist in der Nähe des Topfbodens angeordnet. Der Topf 56a, 56b ist mit dem korrespondierenden Deckel 24a, 24b verschließbar. Der Deckel 24a, 24b weist eine Einfüllöffnung bzw. eine Aufnahmeöffnung 60 auf.

Das Funktionselement 68 (hier Saftpresse) ist über eine Verbindungswelle 48 mit der Rotationseinheit 74 verbunden ist, wobei sich die Verbindungswelle 48 in einem Betriebszustand (also beim Betrieb der Küchenmaschine) von der Rotationseinheit 48 durch den Topf 56a, 56b und die Aufnahmeöffnung 60, durch den Einsteckabschnitt 30 mit dem Aufnahmebereich 50 bis zum Funktionselement 68 erstreckt.

Um den Vorteil des Aufsatzes 10 zu verdeutlichen, ist in Fig. 8 für den Topf 56a die Höhe vom unteren Ende der Verbindungswelle bis zum oberen Rand des Deckels Hₐ und für den Topf 56b die Höhe vom unteren Ende der Verbindungswelle bis zum oberen Rand des Deckels H_{b} eingezeichnet. Wie gut erkennbar ist, unterscheiden sich Hₐ und H_{b} um ein ΔH. Trotz unterschiedlicher Höhen Hₐ und H_{b}, kann mit dem Aufsatz 10 für beide Varianten an Topf 56a, 56b und korrespondierenden Deckeln 24a, 24b eine gleichbleibende Höhe der Bodenfläche 16 des Aufsatzes 10 (Linie 76) erzielt werden, sodass zum Beispiel die Saftpresse 68 immer ordnungsgemäß auf der Verbindungswelle 48 angeordnet werden kann. Der Unterschied ΔH wird dabei vor allem durch die beiden unterschiedlichen Auflageflächen 22, 28 ausgeglichen, wobei die in Steckrichtung S voneinander beabstandeten Rastflächen 40, 44 auch jeweils einen Reibschluss mit beiden Varianten von Deckeln 24a, 24b bewirken.

### Bezugszeichenliste

- 10: Aufsatz
- 12: Grundkörper
- 14: Mantelfläche
- 16: Bodenfläche
- 18: Nut
- 20: Kragen
- 22: erste Anlagefläche
- 24a, 24b: Deckel
- 26: Stirnseite
- 28: zweite Anlagefläche

- 30: Einsteckabschnitt
- 32: Lasche
- 34: Schlitz
- 36: Rippe
- 38: erstes Ende
- 40: erster Vorsprung, erste Rastfläche
- 42: Vertiefung
- 44: zweiter Vorsprung, zweite Rastfläche

- 46: Einführschräge

- 48: Verbindungswelle
- 50: Aufnahmebereich
- 52: Stützstrebe
- 54: Öffnung

- 56a, 56b: Topf
- 58: Deckelfläche
- 60: Aufnahmeöffnung
- 62: Kragen
- 64: Kragen
- 66: Randbereich
- 68: Funktionselement
- 70: Randwulst
- 72: Küchenmaschine
- 74: Rotationselement
- 76: Linie

- S: Steckrichtung

## Patentansprüche

1. Aufsatz für eine Küchenmaschine (72), mit einem Grundkörper (12) und mit einem sich von einer Bodenfläche (16) des Grundkörpers (12) in einer Steckrichtung (S) erstreckenden Einsteckabschnitt (30) zur Verbindung des Aufsatzes (10) mit einem Deckel (24a, 24b),
wobei
auf einer Unterseite der Bodenfläche (16) zwei Auflageflächen (22, 28) ausgebildet sind und die erste Auflagefläche (22) und die zweite Auflagefläche (28) in Steckrichtung (S) betrachtet voneinander beabstandet sind, und wobei der Einsteckabschnitt (30) außenseitig mindestens zwei Vorsprünge (40, 44) aufweist, die in Steckrichtung (S) betrachtet voneinander beabstandet sind und jeweils eine Rastfläche bilden,
und wobei in dem Einsteckabschnitt (30) ein Aufnahmebereich (50) zur Aufnahme einer Verbindungswelle (48) ausgebildet ist,
wobei in dem Aufnahmebereich (50) für die Verbindungswelle (48) ein Gleitlager angeordnet ist.

2. Aufsatz nach dem vorstehenden Anspruch,
**dadurch gekennzeichnet, dass**
die erste Auflagefläche (22) durch eine in der Bodenfläche (16) ausgebildete umlaufende Nut (18) gebildet ist und/oder die zweite Auflagefläche (28) durch einen die Bodenfläche (16) umlaufenden Kragen (20) gebildet ist.

3. Aufsatz nach einem der vorstehenden Ansprüche,
**dadurch gekennzeichnet, dass**
der Einsteckabschnitt (30) mindestens eine Lasche (32) aufweist.

4. Aufsatz nach einem der vorstehenden Ansprüche,
**dadurch gekennzeichnet, dass**
der Einsteckabschnitt (30) außenseitig mindestens eine sich in Steckrichtung (S) erstreckende Rippe (36) aufweist, wobei ein erstes Ende (38) der Rippe (36) den ersten Vorsprung (40) bildet und wobei die Rippe (36) eine Vertiefung (42) aufweist, deren Seitenfläche den zweiten Vorsprung (44) bildet.

5. Aufsatz nach dem vorstehenden Anspruch,
**dadurch gekennzeichnet, dass**
die Rippe (36) im Querschnitt betrachtet eine wellenförmige Geometrie aufweist.

6. Aufsatz nach einem der vorstehenden Ansprüche,
**dadurch gekennzeichnet, dass**
der erste Vorsprung (40) und der zweite Vorsprung (44) in Umfangsrichtung des Einsteckabschnittes (30) beabstandet voneinander angeordnet sind.

7. Aufsatz nach einem der vorstehenden Ansprüche,
**dadurch gekennzeichnet, dass**
der Einsteckabschnitt (30) an dem freien Ende eine Einführschräge (46) aufweist.

8. Aufsatz nach Anspruch 1,
**dadurch gekennzeichnet, dass**
sich der Aufnahmebereich (50) über mindestens eine Stützstrebe (52) an der Innenseite des Einsteckabschnittes (30) abstützt.

9. Aufsatz nach einem der vorstehenden Ansprüche,
**dadurch gekennzeichnet, dass**
die Bodenfläche (16) Öffnungen (54) aufweist oder komplett geschlossen ist.

10. Anordnung eines Aufsatzes (10) nach einem der vorstehenden Ansprüche 1 bis 9 auf einer Küchenmaschine (72) mit einem Topf (56a, 56b) und einem Deckel (24a, 24b),
wobei der Einsteckabschnitt (30) in eine Aufnahmeöffnung (60) des Deckels (24a, 24b) eingesteckt ist und der Grundkörper (12) mit der ersten Auflagefläche (22) oder der zweiten Auflagefläche (28) an dem Deckel (24a, 24b) aufliegt, wobei der Einsteckabschnitt (30) soweit durch den Deckel (24a, 24b) ragt, dass entweder die erste Rastfläche (40) oder die zweite Rastfläche (44) an der Unterseite des Deckels (24a, 24b) anliegt.

11. Anordnung nach dem vorstehenden Anspruch,
**dadurch gekennzeichnet, dass**
der Durchmesser des Einsteckabschnittes (30) mit den außenseitig des Einsteckabschnittes (30) ausgebildeten Vorsprüngen (40, 44) größer ist als der Durchmesser der Aufnahmeöffnung (60) des Deckels (24a, 24b).

12. Anordnung nach einem der beiden vorstehenden Ansprüche,
**dadurch gekennzeichnet, dass**
die Küchenmaschine (72) eine Rotationseinheit (74) aufweist, die mechanisch an eine Antriebseinheit gekoppelt ist und unter Einsatz der Antriebseinheit rotierbar ist, wobei eine Verbindungswelle (48) mit der Rotationseinheit (74) verbunden ist und sich die Verbindungswelle (48) von der Rotationseinheit (74) durch den Topf (56a, 56b) und den Deckel (24a, 24b) bis in den Aufsatz (10) erstreckt.

13. Verfahren zur Verbindung eines Aufsatzes (10) nach einem der vorstehenden Ansprüche 1 bis 9 mit einem Deckel (24a, 24b),
wobei der Aufsatz (10) mit dem Einsteckabschnitt (30) in einer Steckrichtung (S) durch eine Aufnahmeöffnung (60) des Deckels (24a, 24b) geführt wird, solange bis der Aufsatz (10) mit der ersten Auflagefläche (22) oder der zweiten Auflagefläche (28) an dem Deckel (24a, 24b) aufliegt und die erste Rastfläche (40) oder die zweite Rastfläche (44) unterhalb des Deckels (24a, 24b) eingerastet ist.

## Claims

1. An attachment for a food processor (72), with a basic body (12) and with a plug-in portion (30) extending from a base surface (16) of the basic body (12) in a plug-in direction (S), for connecting the attachment (10) to a cover (24a, 24b),
wherein
on an underside of the base surface (16) two bearing surfaces (22, 28) are formed, and the first bearing surface (22) and the second bearing surface (28) are spaced apart from one another when viewed in the plug-in direction (S), and wherein the plug-in portion (30) has at least two projections (40, 44) on the outside, which are spaced apart from one another when viewed in the plug-in direction (S) and each form a latching surface,
and wherein in the plug-in portion (30) a receiving region (50) is formed for receiving a connection shaft (48),
wherein
in the receiving region (50) for the connection shaft (48) a sliding bearing is arranged.

2. The attachment according to the preceding claim,
**characterized in that**
the first bearing surface (22) is formed by a circumferential groove (18) formed in the base surface (16) and/or the second bearing surface (28) is formed by a collar (20) surrounding the base surface (16).

3. The attachment according to one of the preceding claims,
**characterized in that**
the plug-in portion (30) has at least one tongue (32).

4. The attachment according to one of the preceding claims,
**characterized in that**
the plug-in portion (30) has on the outside at least one rib (36) extending in the plug-in direction (S), wherein a first end (38) of the rib (36) forms the first projection (40) and wherein the rib (36) has a depression (42), the lateral face of which forms the second projection (44).

5. The attachment according to the preceding claim,
**characterized in that**
the rib (36), viewed in cross-section, has an undulating geometry.

6. The attachment according to one of the preceding claims,
**characterized in that**
the first projection (40) and the second projection (44) are arranged spaced apart from one another in circumferential direction of the plug-in portion (30).

7. The attachment according to one of the preceding claims,
**characterized in that**
the plug-in portion (30) has an insertion bevel (46) at the free end.

8. The attachment according to Claim 1,
**characterized in that**
the receiving region (50) supports itself on the inner side of the plug-in portion (30) via at least one support strut (52).

9. The attachment according to one of the preceding claims,
**characterized in that**
the base surface (16) has openings (54) or is completely closed.

10. An arrangement of an attachment (10) according to one of the preceding Claims 1 to 9 on a food processor (72) with a pot (56a, 56b) and with a cover (24a, 24b),
wherein the plug-in portion (30) is plugged into a receiving opening (60) of the cover (24a, 24b), and the basic body (12) lies with the first bearing surface (22) or with the second bearing surface (28) on the cover (24a, 24b), wherein the plug-in portion (30) projects so far through the cover (24a, 24b) that either the first latching surface (40) or the second latching surface (44) lies against the underside of the cover (24a, 24b).

11. The arrangement according to the preceding claim,
**characterized in that**
the diameter of the plug-in portion (30) with the projections (40, 44) formed on the outside of the plug-in portion (30) is greater than the diameter of the receiving opening (60) of the cover (24a, 24b).

12. The arrangement according to one of the two preceding claims,
**characterized in that**
the food processor (72) has a rotation unit (74), which is coupled mechanically to a drive unit and is rotatable with the use of the drive unit, wherein a connection shaft (48) is connected to the rotation unit (74) and the connection shaft (48) extends from the rotation unit (74) through the pot (56a, 56b) and the cover (24a, 24b) up into the attachment (10).

13. A method for connecting an attachment (10) according to one of the preceding claims 1 to 9 with a cover (24a, 24b),
wherein the attachment (10) is guided with the plug-in portion (30) in a plug-in direction (S) through a receiving opening (60) of the cover (24a, 24b), until the attachment (10) lies with the first bearing surface (22) or with the second bearing surface (28) on the cover (24a, 24b), and the first latching surface (40) or the second latching surface (44) is engaged beneath the cover (24a, 24b).

## Revendications

1. Elément rapporté pour un robot culinaire (72) avec un corps de base (12) et avec une section d'emboîtement (30) s'étendant d'une surface de fond (16) du corps de base (12) dans un sens d'emboîtement (S) pour la liaison de l'élément rapporté (10) avec un couvercle (24a, 24b),
sachant que
deux surfaces d'appui (22, 28) sont constituées sur une face inférieure de la surface de fond (16) et la première surface d'appui (22) et la deuxième surface d'appui (28) sont distantes l'une de l'autre, vues dans le sens d'emboîtement (S) et sachant que la section d'emboîtement (30) comporte extérieurement au moins deux saillies (40, 44), qui sont distantes l'une de l'autre, vues dans le sens d'emboîtement (S) et forment respectivement une surface d'enclenchement,
sachant qu'une zone de logement (50) est constituée dans la section d'emboîtement (30) pour loger un arbre de liaison (48),
et sachant qu'un palier lisse est disposé dans la zone de logement (50) pour l'arbre de liaison (48).

2. Elément rapporté selon la revendication précédente,
**caractérisé en ce que**
la première surface d'appui (22) est formée par une rainure (18) périphérique constituée dans la surface de fond (16) et/ou la deuxième surface d'appui (28) est formée par une collerette (20) entourant la surface de fond (16).

3. Elément rapporté selon l'une quelconque des revendications précédentes,
**caractérisé en ce que**
la section d'emboîtement (30) comporte au moins une attache (32).

4. Elément rapporté selon l'une quelconque des revendications précédentes,
**caractérisé en ce que**
la section d'emboîtement (30) comporte extérieurement au moins une nervure (36) s'étendant dans le sens d'emboîtement (S), sachant qu'une première extrémité (38) de la nervure (36) forme la première saillie (40) et sachant que la nervure (36) comporte une cavité (42), dont la surface latérale forme la deuxième saillie (44).

5. Elément rapporté selon la revendication précédente, **caractérisé en ce que**
la nervure (36), vue en section, comporte une géométrie ondulée.

6. Elément rapporté selon l'une quelconque des revendications précédentes,
**caractérisé en ce que**
la première saillie (40) et la deuxième saillie (44) sont disposées distantes l'une de l'autre dans le sens périphérique de la section d'emboîtement (30).

7. Elément rapporté selon l'une quelconque des revendications précédentes,
**caractérisé en ce que**
la section d'emboîtement (30) comporte à l'extrémité libre un chanfrein d'introduction (46).

8. Elément rapporté selon la revendication 1, **caractérisé en ce que**
la zone de logement (50) s'appuie sur au moins un montant de support (52) sur le côté intérieur de la section d'emboîtement (30).

9. Elément rapporté selon l'une quelconque des revendications précédentes,
**caractérisé en ce que**
la surface de fond (16) comporte des ouvertures (54) ou est complètement fermée.

10. Agencement d'un élément rapporté (10) selon l'une quelconque des revendications précédentes 1 à 9 sur un robot culinaire (72) avec un pot (56a, 56b) et un couvercle (24a, 24b),
sachant que la section d'emboîtement (30) est emboîtée dans une ouverture de logement (60) du couvercle (24a, 24b) et le corps de base (12) repose avec la première surface d'appui (22) ou la deuxième surface d'appui (28) sur le couvercle (24a, 24b), sachant que la section d'emboîtement (30) dépasse à tel point à travers le couvercle (24a, 24b) que soit la première surface d'enclenchement (40), soit la deuxième surface d'enclenchement (44) s'applique à la face inférieure du couvercle (24a, 24b).

11. Agencement selon la revendication précédente,
**caractérisé en ce que**
le diamètre de la section d'emboîtement (30) avec les saillies (40, 44) constituées à l'extérieur de la section d'emboîtement (30) est plus grand que le diamètre de l'ouverture de logement (60) du couvercle (24, 24b).

12. Agencement selon l'une des deux revendications précédentes,
**caractérisé en ce que**
le robot culinaire (72) comporte une unité de rotation (74), qui est couplée mécaniquement à une unité d'entraînement et peut être tournée en utilisant l'unité d'entraînement, sachant qu'un arbre de liaison (48) est relié à l'unité de rotation (74) et l'arbre de liaison (48) s'étend de l'unité de rotation (74) à travers le pot (56a, 56b) et le couvercle (24a, 24b) jusque dans l'élément rapporté (10).

13. Procédé de liaison d'un élément rapporté (10) selon l'une quelconque des revendications précédentes 1 à 9 avec un couvercle (24a, 24b),
sachant que l'élément rapporté (10) est mis avec la section d'emboîtement (30) dans un sens d'emboîtement (S) par une ouverture de logement (60) du couvercle (24a, 24b) jusqu'à ce que l'élément rapporté (10) repose avec la première surface d'appui (22) ou la deuxième surface d'appui (28) sur le couvercle (24a, 24b) et la première surface d'enclenchement (40) ou la deuxième surface d'enclenchement (44) soit enclenchée sous le couvercle (24a, 24b).
